# FASCICULE DE BREVET EUROPEEN

(11) **EP 3 615 966 B1**
(45) Date de publication et mention de la délivrance du brevet: **09.06.2021**
(21) Numéro de dépôt: 18726526.9
(22) Date de dépôt: 27.04.2018
(51) Int. Cl.: G01V 15/00, G01M 5/00

(54) **PROCEDE, SYSTEME ET PROGRAMME D'ESTIMATION DU DEPLACEMENT D'UNE STRUCTURE GEOLOGIQUE ET/OU DE GENIE CIVIL SUSCEPTIBLE DE SE DEPLACER**
VERFAHREN, SYSTEM UND PROGRAMM ZUR SCHÄTZUNG DER BEWEGUNG EINER POTENZIELL BEWEGLICHEN GEOLOGISCHEN UND/ODER BAULICHEN STRUKTUR
METHOD, SYSTEM AND PROGRAM FOR ESTIMATING THE MOVEMENT OF A POTENTIALLY MOVABLE GEOLOGICAL AND/OR CIVIL ENGINEERING STRUCTURE

(30) Priorité: 28.04.2017 FR 1753739
(43) Date de publication de la demande: 04.03.2020
(73) Titulaire: Université Grenoble Alpes, 38400 Saint-Martin-d'Hères (FR); Geolithe, 38920 Crolles (FR)
(72) Inventeur: BAILLET, Laurent, 38660 La Terrasse (FR); LE BRETON, Mathieu, 38100 Grenoble (FR); LAROSE, Eric, 38240 Meylan (FR); JONGMANS, Denis, 73800 Sainte Helene Du Lac (FR); REY, Etienne, 38420 Crolles (FR); GUYOTON, Fabrice, 38420 Revel (FR)
(74) Mandataire: Bronchart, Quentin
(86) Numéro de dépôt international: PCT/FR2018/051078
(87) Numéro de publication internationale: WO 2018/197824

(56) Documents cités:
- Abeysing Jayawardana Yapa Devaka Manoj: "Wireless Sensor System for Infrastructure Health Monitoring", PhD thesis, 1 janvier 2017 (2017-01-01), XP055432643, Extrait de l'Internet: URL:http://researchdirect.westernsydney.ed u.au/islandora/object/uws:41063/datastream /PDF/download/citation.pdf [extrait le 2017-12-06]
- PAVEL V NIKITIN ET AL: "Phase based spatial identification of UHF RFID tags", RFID, 2010 IEEE INTERNATIONAL CONFERENCE ON, IEEE, PISCATAWAY, NJ, USA, 14 avril 2010 (2010-04-14), pages 102-109, XP031677646, ISBN: 978-1-4244-5742-7
- BOGDAN LIEA ET AL: "Passive wireless sensors for monitoring particle movement at soil-structure interfaces", PROCEEDINGS OPTICAL DIAGNOSTICS OF LIVING CELLS II, vol. 7647, 25 mars 2010 (2010-03-25), page 76470F, XP055432635, US ISSN: 0277-786X, DOI: 10.1117/12.847271 ISBN: 978-0-8194-0228-8
- O Rorato ET AL: "An ad-hoc RFID tag for glaciers monitoring", IEEE-APS Topical Confe. on Antennas and Propagation in Wireless Communications, 1 août 2014 (2014-08-01), XP055432160, Extrait de l'Internet: URL:http://www.fondazionemontagnasicura.or g/asset/an-ad-hoc-rfid-tag-for-glaciers-mo nitoring.pdf [extrait le 2017-12-05]

## Description

### DOMAINE DE L'INVENTION

L'invention concerne un procédé d'estimation du déplacement d'une structure, par exemple géologique et/ou de génie civil, susceptible de se déplacer et/ou se déformer. Elle concerne également un système et un programme d'ordinateur permettant de mettre en œuvre ce procédé.

### ARRIERE PLAN TECHNOLOGIQUE DE L'INVENTION

Le suivi des mouvements gravitaires ou de l'intégrité des bâtiments, des ouvrages, ou des fouilles urbaines est un enjeu majeur de sécurité pour la population. Dans le cadre d'une gestion durable d'un territoire, il est souvent nécessaire de mettre en œuvre un système de surveillance robuste et peu couteux de ces structures géologiques et/ou de génie civil. La déformation, le déplacement et la vitesse du déplacement induite par ces déformations de structures sont les paramètres les plus couramment surveillés pour l'identification de zones de danger.

De nombreuses techniques permettent de mesurer ces déplacements. La mesure à partir d'extensomètre est la plus utilisée, mais ne permet la détection que de 50% des instabilités. On connaît également des méthodes de type géodésique avec l'installation de cibles ponctuelles au sein des structures, et de télédétection (par exemple optique, laser ou radar) permettant d'obtenir un champ de déplacement de la zone en mouvement. Chacune de ces techniques se caractérise par des limites en termes de coût d'installation, de maintenance, de déploiement en conditions topographiques et climatiques difficiles (pluie, brouillard, neige, basses températures, ...) .

La technologie RFID (de l'acronyme anglo-saxon « Radio Frenquency Identification », et signifiant « radio-identification ») utilise une communication par onde électromagnétique radio fréquence entre une antenne et une radio-étiquette de petite taille, souvent associée ou incorporée à un objet. La technologie RFID trouve une application dans le domaine de la logistique et de la distribution, pour identifier, compter, suivre ces objets.

On connaît du document EP2339315 un procédé mettant en œuvre la technologie RFID pour surveiller les déplacements des nœuds d'une structure susceptible de se déformer. Cette méthode consiste à produire une onde électromagnétique interférente par deux radio-étiquettes (dont une est placée dans une zone stable) sollicitées simultanément, et d'analyser les caractéristiques de cette onde pour en déduire la position relative des étiquettes. L'approche proposée par ce document est particulièrement complexe à mettre en œuvre Le document Manoj, A. J. Y. D: "Wireless Sensor System for Infrastructure Health Monitoring", 2017, Doctoral dissertation, Western Sydney University, Australia, décrit un procédé d'estimation du déplacement d'une structure à partir des phases des signaux rétrodiffusés par une radio-étiquette disposée sur la structure.

### OBJET DE L'INVENTION

Un objet de la présente invention est de remédier à tout ou partie des inconvénients de l'art antérieur. Plus précisément, un objet de l'invention est de proposer un procédé alternatif d'estimation du déplacement d'une structure géologique et/ou de génie civil susceptible de se déplacer, plus simple à mettre en œuvre que ceux de l'état de la technique. Elle permet notamment de déployer la technique RFID dans un environnement extérieur pour la surveillance en continu, et à distance, des mouvements de terrain et des bâtiments.

### BREVE DESCRIPTION DE L'INVENTION

En vue de la réalisation de ce but, l'objet de l'invention propose un procédé d'estimation du déplacement d'une structure géologique et/ou de génie civil susceptible de se déplacer, la structure étant munie d'au moins une radio-étiquette, et le procédé mettant en œuvre au moins une antenne raccordée à un terminal d'émission réception et disposée dans une zone stable indépendante de la structure, à portée de la radio-étiquette. Selon l'invention le procédé comporte :
- une première étape de détermination, en un premier instant et au niveau du terminal, d'une première phase d'un premier signal rétrodiffusé par la radio-étiquette;
- une deuxième étape de détermination, en un deuxième instant postérieur au premier instant et au niveau du terminal, d'une deuxième phase d'un deuxième signal rétrodiffusé par la radio-étiquette;
- une étape de traitement de la première phase et de la deuxième phase, comprenant une compensation des perturbations de propagation radiofréquence sur la première phase et la deuxième phase, pour estimer le déplacement de la structure entre le premier instant et le deuxième instant.

Selon d'autres caractéristiques avantageuses et non limitatives de l'invention, prises seules ou selon toute combinaison techniquement réalisable :
- la structure est munie d'une pluralité de radio-étiquettes disposées en des endroits distincts de la structure ;
- Le procédé met en œuvre une pluralité d'antennes disposées en des endroits distincts de la zone stable ;
- la compensation comprend la détermination, au niveau du terminal, d'une phase de calibration d'un signal rétrodiffusé par une radio-étiquette de calibration positionnée sur la zone stable ;
- la compensation comprend une calibration de la première phase et de la deuxième phase selon la température de chaque radio-étiquette ;
- la compensation comprend une calibration de la première phase et de la deuxième de phase selon une épaisseur de neige ;
- l'étape de traitement établit une différence entre la première phase et la deuxième phase pour estimer le déplacement de la structure selon une direction générale antenne-structure.

Selon un autre aspect, l'objet de l'invention propose un système d'estimation du déplacement d'une structure géologique et/ou de génie civil susceptible de se déplacer, le système comprenant :
- au moins une radio-étiquette disposée sur la structure ;
- un terminal d'émission réception configuré pour établir une phase d'un signal rétrodiffusé par la radio-étiquette ;
- au moins une antenne raccordée au terminal d'émission réception, l'antenne étant disposée dans une zone stable indépendante de la structure, à portée de la radio-étiquette ;
- un dispositif de traitement relié au terminal d'émission-réception et configuré pour : i. compenser les perturbations de propagation radiofréquence d'une première phase établie en un premier instant et d'une deuxieme phase établie en un deuxième instant postérieur au premier instant ; ii. estimer le déplacement de la structure entre le premier instant et le deuxième instant, à partir de la première phase et de la deuxième phase.

Selon d'autres caractéristiques avantageuses et non limitatives de l'invention, prises seules ou selon toute combinaison techniquement réalisable :
- Le système est muni d'une pluralité d'antennes disposées en des endroits distincts de la zone stable ;
- la structure est munie d'une pluralité de radio-étiquettes disposées en des endroits distincts ;
- la structure est une structure géologique et dans lequel chaque radio-étiquette et/ou chaque antenne est disposée sur un support non métallique ;
- Le système comprenant également une radio-étiquette de calibration disposée dans la zone stable ;
- chaque radio-étiquette comporte un capteur de température ;
- un câble de connexion relie une antenne à un terminal ;
- lequel chaque radio-étiquette et/ou chaque antenne est recouverte d'un film hydrophobe.

Enfin, l'objet de l'invention porte également sur un programme d'ordinateur comprenant des instructions de code programme pour l'exécution de l'étape de traitement du procédé conforme à l'invention, lorsque le programme est exécuté sur un ordinateur.

### BREVE DESCRIPTION DES DESSINS

L'invention sera mieux comprise à la lumière de la description qui suit d'un mode de réalisation particulier non limitatif de l'invention en référence aux figures ci-jointes parmi lesquelles :
- La figure 1 représente une vue d'ensemble d'un système d'estimation du déplacement d'une structure conforme à l'invention ;
- La figure 2 schématise les différentes étapes d'un mode de mise en œuvre d'un procédé d'estimation du déplacement d'une structure conforme à l'invention ;
- La figure 3 représente un mode de mise en œuvre particulier de l'invention.

### DESCRIPTION DETAILLEE DE L'INVENTION

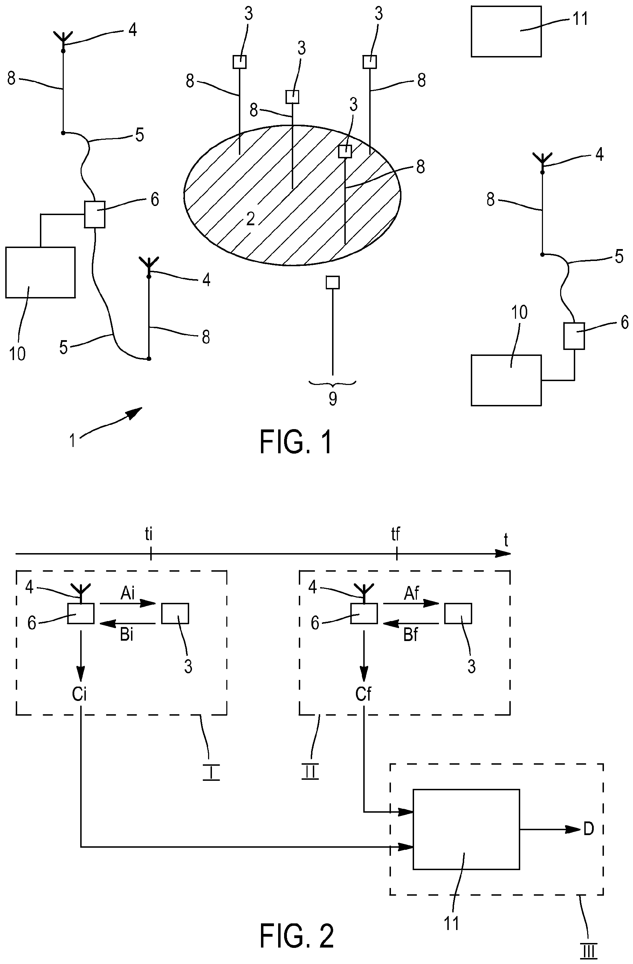

La figure 1 représente une vue d'ensemble d'un système 1 d'estimation du déplacement d'une structure 2 conforme à l'invention.

La structure 2 peut être de nature géologique, telle qu'un glacier, une falaise, un écoulement argileux, des fouilles urbaines et/ou de génie civil, tel qu'un pont, un barrage... Quelle que soit la nature de la structure 2, elle est susceptible de se déplacer, ce qui peut constituer un risque (glissement, éboulement, effondrement...) que le système 1 vise à évaluer. Le déplacement peut correspondre à un déplacement dans son ensemble de la structure 2, ou être lié à sa déformation. Pour une raison de simplicité de la description à venir, on considérera que la structure 2 est de nature géologique dans le cadre de l'exemple représenté sur la figure 1.

Le système 1 comporte, disposé sur la structure 2, au moins une radio-étiquette 3. Par « radio-étiquette », et comme on l'a déjà évoqué en introduction de cette demande, on désigne un dispositif comprenant une antenne couplée à une puce d'émission-réception permettant à la radio-étiquette de recevoir et transmettre des données à un terminal, par l'intermédiaire d'une onde électromagnétique radiofréquence. Les données transmises peuvent être de différentes natures, il peut s'agir par exemple d'un identifiant unique de la radio-étiquette, de ses données d'état, de données de télémétrie telle que la température ou l'humidité, si la puce est munie de capteurs permettant la mesure de ces informations. La transmission peut se faire sur une distance relativement importante, plusieurs mètres ou dizaines de mètres, voire même plusieurs centaines de mètres.

Selon l'invention, la radio-étiquette 3 est de type passif, c'est-à-dire qu'elle communique avec un terminal d'émission-réception par rétrodiffusion d'un signal émis par une antenne associée au terminal (technologie de « backscattering » selon la terminologie anglo-saxonne souvent employée). Elle tire une partie au moins de son énergie de fonctionnement du rayonnement électromagnétique émis par le terminal.

Plus précisément, et comme cela est par exemple bien documenté dans l'article de P. Nikitin « Phase based spatial identification of UHF RFID tags » In RFID, 2010 IEEE International Conference, pp. 102-109, lorsqu'un terminal d'émission-réception est en mode réception, il émet via une antenne d'émission-réception un signal souvent composé d'une simple porteuse. Ce signal est capté par l'antenne de la radio-étiquette. La puce d'émission réception de la radio étiquette procède à la modulation du signal reçu par un signal utile, en bande de base, qui peut par exemple comporter les informations d'identification, d'état, de télémétrie dont on a fait mention précédemment. Le signal modulé par la puce d'émission-réception (en amplitude, en phase, ou en fréquence) est rayonné par l'antenne de la radio-étiquette, et capté par l'antenne du terminal d'émission-réception. On désignera dans la suite de la présente demande par l'expression « signal rétrodiffusé » le signal utile, en bande de base, incorporé dans le signal électromagnétique transmis entre la radio-étiquette et le terminal d'émission-réception.

Le signal reçu par l'antenne du terminal est démodulé, afin de reconstituer au niveau du terminal le signal utile, en bande de base, qui peut être décodé afin d'en extraire les informations communiquées par la radio-étiquette. Cette étape passe généralement par l'établissement des composantes « en phase I » et « en quadrature Q » du signal utile relativement à un signal de référence établit par un oscillateur local du terminal. On désignera par l'expression « phase du signal rétrodiffusé », l'angle formé par les composantes du signal utile dans le plan I-Q, au niveau du terminal de réception.

La présente invention met à profit les propriétés de la phase du signal rétrodiffusé pour proposer une estimation du déplacement de la structure 2. Ainsi, et pour revenir à la description de la figure 1, la radio-étiquette 3 forme un repère sur la structure 2, dont on va mesurer le déplacement afin d'estimer indirectement celui de la structure 2. De manière avantageuse, et comme cela est représenté sur la figure 1, la structure 2 peut être munie d'une pluralité de radio-étiquettes 3, disposée en des endroits distincts de la structure 2, de manière à estimer un champ de déplacement, et permettre une estimation plus fine du risque.

Le système 1 comporte également au moins une antenne 4 raccordée à un terminal d'émission réception 6. La liaison entre l'antenne 4 et le terminal 6 peut être réalisée par un câble 5, permettant de positionner l'antenne vis-à-vis de la structure 4, indépendamment de l'emplacement du terminal 6. L'antenne 4 est disposée dans une zone stable (c'est à dire qui n'est pas susceptible de se déplacer) indépendante de la structure 2 afin de ne pas être affectée par le mouvement de cette dernière. L'antenne 4 est disposée à portée d'au moins une radio-étiquette 3 afin de pouvoir entrer en communication avec celle-ci. Comme représenté sur la figure 1, une pluralité d'antennes 4 peut être disposée en des endroits distincts de la zone stable pour mieux estimer la direction du déplacement ou champ de déplacement de la structure 2, comme cela sera exposé plus en détail dans la suite de cet exposé.

Le terminal 6 a pour fonction de générer le signal à émettre par l'antenne 4 et traiter les signaux retournés par chaque radio-étiquette 3 et reçus par l'antenne 4. Il permet notamment d'établir, pour chaque radio-étiquette 3, la phase du signal rétrodiffusé.

Dans le cas où le système 1 comprend une pluralité d'antennes 4, on peut prévoir une pluralité de terminaux 6, chaque terminal 6 pouvant être relié à une ou plusieurs antennes 4. Que le système présente un unique terminal 6, ou une pluralité de terminaux 6, les signaux émis par chaque antenne 4 présentent avantageusement une fréquence de porteuse propre au terminal auquel elle est reliée de manière à isoler dans des canaux distincts les communications qui s'établissent au niveau de chaque terminal 6. Dans le cas où plusieurs antennes 4 sont reliées au même terminal 6, elles émettront préférentiellement de manière séquentielle pour ne pas interférer entre elles.

Dans le cas où le système est disposé en un lieu éloigné d'un point de connexion au réseau électrique, on peut associer le terminal 6 à une source d'énergie 10 telle que des batteries, des panneaux solaires, une éolienne, une pile à combustible, de manière à rendre le système 1 entièrement autonome en énergie.

Le système 1 comporte également un dispositif de traitement 11, relié au terminal 6, et configuré pour estimer le déplacement de la structure 2 à partir des phases des signaux rétrodiffusés par la (ou les) radio-étiquette 3 établies par le terminal 6, comme cela sera exposé dans le détail dans la suite de cet exposé.

Le dispositif de traitement 11 peut être disposé à l'immédiate proximité de la structure, et dans ce cas il peut être relié au terminal 6 par l'intermédiaire d'une liaison filaire (du type USB ou Ethernet) ou d'une liaison sans fil à courte portée (bluetooth™, Wifi,...). Alternativement, le dispositif de traitement 11 peut être très éloigné de la structure 2, et dans ce cas relié au terminal 6 par l'intermédiaire d'une liaison sans fil à longue portée (GSM, Lora™ ...)

Chaque radio-étiquette 3 peut être disposée en élévation au-dessus de la structure 2. Similairement, chaque antenne 4 peut être disposée en élévation au-dessus de la zone stable. Cette configuration permet d'assurer une meilleure communication entre chaque radio-étiquette 3 et chaque antenne 4. Elle permet notamment d'améliorer la portée des antennes 4. Elle permet également de limiter l'impact sur la propagation des signaux de la pousse de végétation, de la présence de neige, de l'humidité qui pourrait, avec le temps, recouvrir toute ou partie des radio-étiquettes 3. L'élévation de chaque radio-étiquette 3 et/ou de l'antenne 4 peut être réalisée en les plaçant sur un support 8 fixé au sol. Ce support 8 est constitué de préférence d'un matériau non métallique afin de ne pas interférer avec les signaux émis et/ou reçus. Il est de préférence imperméable, pour éviter une fluctuation de son contenu en eau en fonction des conditions météorologiques, qui modifierait ses propriétés électromagnétiques et influencerait la phase. Il doit être suffisamment rigide, afin de limiter les déplacements parasites de la radio-étiquette 3 ou de l'antenne 4 qu'il soutient, par exemple sous l'effet du vent.

Il est aussi possible de recouvrir chaque radio-étiquette 3 et chaque antenne 4 d'un film ou d'une substance hydrophobe de manière à prévenir la stagnation d'eau sur ces dernières qui influencerait la propagation des signaux émis et/ou reçus. Alternativement, ou en complément, on peut prévoir de placer un radôme large autour des radio-étiquettes pour réduire, voire annuler, l'effet de champ proche de l'eau qui serait susceptible d'être présente.

Pour éviter la condensation qui peut se former à la surface des radio-étiquettes notamment pendant la nuit, celles-ci peuvent être revêtues d'un matériau isolant thermique, bloquant en particulier le transfert de chaleur par rayonnement. On évite ou on limite ainsi la chute de température de la radio étiquette sous la température de rosée (proche de la température de l'air pendant la nuit) qui provoque la génération d'une pellicule d'eau de condensation.

La figure 2 représente un schéma de principe d'un procédé conforme à l'invention, mettant en œuvre une seule radio-étiquette 3 et une seule antenne 4.

La phase d'un signal rétrodiffusé ne permet pas de déterminer la position de la radio-étiquette émettrice (car cette phase résulte de la contribution de plusieurs phénomènes : propagation du signal électromagnétique dans le milieu, traitement par la puce d'émission-réception de la radio-étiquette, propagation des signaux entre l'antenne et le terminal, ...).

Toutefois, en formant l'hypothèse que les contributions non liées à la distance séparant l'antenne 4 de la radio-étiquette 3 sont stables dans le temps, l'écart existant entre une première phase établie en un premier instant et d'une deuxième phase établie en un deuxième est uniquement lié au déplacement relatif de la radio-étiquette 3 et de l'antenne 4.

Selon l'invention, le procédé comporte une première étape I, en un premier instant ti, au cours de laquelle on détermine au niveau du terminal 6, une première phase Ci d'un premier signal rétrodiffusé Bi par la radio-étiquette 3 suite à la réception d'un premier signal Ai émise par l'antenne 6.

L'invention prévoit dans une deuxième étape II, en un deuxième instant tf postérieur au premier instant ti, la détermination, au niveau du terminal 6, d'une deuxième phase Cf d'un deuxième signal rétrodiffusé Bf par la radio-étiquette 3 suite à la réception d'un deuxième signal Af émis par l'antenne 4.

L'écart entre la première phase Ci à l'instant ti et deuxième phase Cf à l'instant tf reflète le déplacement de la radio-étiquette 3.

Ainsi, selon un mode de mis en œuvre de l'invention dans lequel on cherche à estimer le mouvement de la structure selon une direction générale antenne-structure, l'écart de phase ΔΦ entre le premier et le deuxième instant peut par exemple être ramené à un déplacement D à l'aide de la formule : D = - v_{ΔΦ}/ (4πf) où f est la fréquence du signal rétrodiffusé, et v la vitesse des ondes électromagnétiques dans l'air. Cette formule est vraie à la condition que le déplacement observé entre un premier instant et un deuxième instant soit inférieur à un quart de la longueur d'onde.

Le procédé comprend ainsi une étape de traitement III, qui peut être réalisée par le dispositif de traitement 11, de la première phase Ci et de la deuxième phase Cf pour estimer le déplacement D de la structure 2 entre le premier instant ti et le second instant tf, par exemple selon la formule établie précédemment.

Bien entendu, le temps séparant le premier instant du deuxième instant doit être choisi selon la dynamique des mouvements que l'on s'attend à observer afin que la structure 2 ait un déplacement inférieur à un quart de la longueur d'onde entre l'instant ti et tf. Dans le cadre de la présente invention, c'est à dire pour la mesure du déplacement de structure 2 de nature géologique ou de génie civil dont la dynamique est relativement lente, on pourra choisir une période comprise entre quelques heures et quelques jours. Avantageusement, on pourra ajuster cette période, à la hausse ou à la baisse, selon la vitesse de déplacement observée de la structure 2.

Afin d'améliorer la mesure de phase qui est réalisée au cours de la première et de la deuxième étape de détermination, il est possible que ces étapes comprennent, sur une très brève période de temps, l'émission et la réception d'une pluralité de signaux entre l'antenne 4 et la radio-étiquette 3, afin de fournir une mesure moyenne de la première ou de la deuxième phase.

Les principes qui viennent d'être exposés peuvent être appliqués à un système d'estimation de déplacement comportant une pluralité d'antennes 4 et/ou de radio-étiquettes 3, comme cela a été présenté en relation avec la figure 1.

Lorsque l'on dispose d'une unique antenne, et donc capable d'estimer des déplacements selon une direction uniquement, on disposera préférentiellement celle-ci de manière à ce que la direction générale antenne 4 - structure 2 corresponde à la direction attendue de déplacement de la structure 2.

De préférence, le système 1 comporte plusieurs antennes, de manière à pouvoir estimer le déplacement ou le champ de déplacement de la structure 2 selon plusieurs directions et/ou avec une meilleure précision. Dans ce cas, les étapes composant le procédé qui vient d'être présenté peuvent être mises en œuvre par chaque terminal 6, et pour chaque antenne 4, de manière concourante et/ou séquentielle, notamment dans le cas où plusieurs antennes 4 sont reliées au même terminal 6.

Par triangularisation, l'emploi de trois antennes 4 ou plus, convenablement disposées autour de la structure 2 (c'est à dire selon trois directions différentes entre les antennes 3 et la structure 2), permet d'estimer le déplacement ou le champ de déplacement de la structure 2 dans l'espace. Ce traitement, et plus généralement tous les traitements réalisés sur les phases des signaux rétrodiffusés peuvent être mise en œuvre par le dispositif de traitement 11.

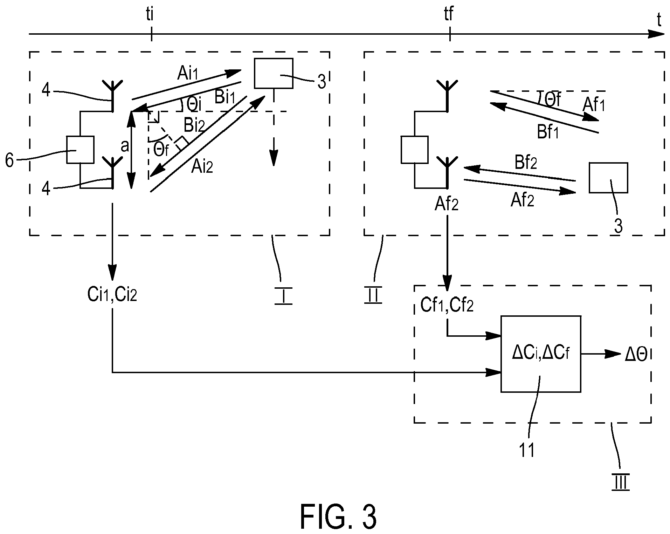

Dans un mode de mise en œuvre de l'invention, le mouvement de la structure 2 est estimé par son déplacement angulaire vis-à-vis d'un réseau d'antennes 6 dans une configuration d'estimation d'angle d'arrivée. Dans ce mode de mise en œuvre, une pluralité d'antennes 4 sont disposées perpendiculairement à la direction de déplacement attendu de la structure 2, c'est-à-dire que les directions générales entre chaque antenne 4 et la structure 2 est essentiellement perpendiculaire à la direction de déplacement attendu de la structure. Ce mode de mise en œuvre particulier de l'invention est représenté sur la figure 3.

On détermine au cours de la première étape I, en un premier instant ti, les premières phases Ci1, Ci2 de premiers signaux rétrodiffusés Bi1, Bi2 par la radio-étiquette 3 suite à la réception de premiers signaux Ai1, Ai2 émis par les antennes 4. Cette détermination peut être réalisée au niveau d'un unique terminal 6.

L'écart ou les écarts existants entre les premières phases Ci1, Ci2 peut être exploité pour estimer la position angulaire de la radio-étiquette 3, en notant que θi = arcsin(-v/(2πf)^{∗}(Ci1 - Ci2)/a) où a représente la distance séparant les deux antennes.

Au cours de la deuxième étape II du procédé selon ce mode particulier de mise en œuvre de l'invention, et en un deuxième instant tf postérieur au premier instant ti, on détermine les deuxièmes phases Cf1, Cf2 de deuxièmes signaux rétrodiffusés Bf1, Bf2 par la radio-étiquette 3 suite à la réception des deuxièmes signaux Af1, Af2 émis par les antennes 4.

Similairement à la première étape, on peut renouveler le traitement permettant, à partir des phases établies Cf1, Cf2, de déterminer la position angulaire de la radio-étiquette 3 θf à l'instant tf .

Dans ce mode de mise en œuvre, le déplacement D de la radio-étiquette 3 est estimé par la variation de la position angulaire entre le premier et le deuxième instant.

La détermination de la position angulaire au premier instant ti, au deuxième instant tj, et la variation de déplacement angulaire peut être mis en œuvre par le dispositif de traitement 11 au cours de l'étape III de traitement du procédé.

Quel que soit le mode de mise en œuvre choisi, dans le cas où plusieurs radio-étiquettes 3 sont disposées sur la structure 2, le terminal 6 ou les terminaux 6 saura discriminer les premiers et deuxièmes signaux rétrodiffusés Bi, Bj ; Bij, Bfj selon l'identifiant unique de chaque radio-étiquette 3. Par conséquent l'étape de traitement III permettra d'établir le déplacement D de chaque radio-étiquette 3 par rapport à l'antenne 4 qui a émis le premier et le deuxième signal Ai, Af.

Comme cela a été évoqué précédemment, la présente invention repose sur l'hypothèse que la phase du signal rétrodiffusé est essentiellement affectée, entre deux instants de mesure, par le déplacement de la radio-étiquette 3. L'observation du déplacement de la structure 2 pouvant s'étendre sur des longues périodes, et la durée séparant deux instants de mesure pouvant être relativement longue (de l'ordre de l'heure ou de la journée, par exemple), il n'est pas toujours possible de vérifier cette hypothèse tout au long de la campagne de mesure. En effet, bien que l'expérimentation ait montré que la phase d'un signal rétrodiffusé soit peu affecté par la température, le degré d'humidité, et les autres paramètres de l'air dans lequel se propagent principalement les signaux, d'autres paramètres environnementaux peuvent affecter le fonctionnement de l'antenne 4 et/ou de la radio-étiquette 3 et/ou du terminal 6, voire même du câble pouvant relier l'antenne 4 au terminal 6, et donc la phase du signal rétrodiffusé.

Pour parer à cela, et selon l'invention, le procédé prévoit une compensation des perturbations de propagation radiofréquence des phases établies. Ce traitement de compensation est compris dans l'étape de traitement, et mise en œuvre par le dispositif de traitement 11.

Selon une première approche, la compensation comprend une calibration de la première phase et de la deuxième phase selon la température de chaque radio-étiquette 3.
A cet effet, on a prévu de munir chaque radio-étiquette 3 d'un dispositif de mesure de température. Ce dispositif de mesure peut être intégré à la puce d'émission-réception de la radio-étiquette. Cette mesure est transmise, en combinaison avec l'identifiant unique, dans le signal rétrodiffusé de la radio-étiquette 3 à l'antenne 4, et rendu disponible au dispositif de traitement.

La calibration des mesures de phase, pour chaque radio-étiquette 3, s'effectue à partir d'une courbe ou d'une table préétablie donnant l'ajustement à apporter à une phase déterminée en fonction de la température mesurée et fournie par la radio-étiquette 3.

Une approche similaire de compensation peut être prévue pour calibrer la première phase et de la deuxième phase selon la quantité d'eau présent sur chaque radio-étiquette 3, notamment dans le cas où l'on n'a pas prévu de couvrir cette radio-étiquette d'un film hydrophobe ou d'un radôme large. On prévoira dans ce cas de munir chaque radio-étiquette d'un dispositif permettant de caractériser la pellicule d'eau qui la recouvre.

Alternativement, on peut prévoir que la radio-étiquette soit auto compensée en température, ou en humidité. A titre d'exemple, on peut compenser les effets sur la phase de la température de la puce d'émission-réception d'une radio-étiquette, en disposant un matériau diélectrique sur l'antenne de cette radio-étiquette induisant un effet sur la phase, avec la température, opposé à celui dû à la puce.

Selon une autre approche, combinable à l'une des approches précédentes, la compensation comprend la mesure, au niveau du terminal 6, de la phase de calibration d'un signal rétrodiffusé par une radio-étiquette de calibration 9 positionnée sur la zone stable, et dont la distance à l'antenne 4 est fixe dans le temps. Cette mesure de phase de calibration vise à qualifier la chaine constituée du terminal 6, de l'antenne 4 et de l'éventuel câble 5. La différence observée de cette phase de calibration entre deux acquisitions permet d'ajuster les phases déterminées au cours du procédé de l'invention pour prendre en compte la variation pouvant intervenir dans cette chaine de mesure.

De manière avantageuse, on combinera les approches de compensation de manière à déterminer des écarts de phase les plus juste possible.

De manière similaire, on pourra compenser la présence d'une épaisseur de neige recouvrant l'antenne 4 et/ou les radio étiquettes 3, cette épaisseur pouvant affecter la propagation des ondes électromagnétiques. L'information d'épaisseur de neige peut par exemple être obtenue au niveau du dispositif de traitement 11 grâce à la présence à proximité de la structure 2 d'une station météo connectée, ou d'une caméra connectée pointant vers un piquet gradué, ou l'utilisation de tout autre dispositif permettant d'obtenir les informations nécessaires, et relié au dispositif de traitement 11. Cette compensation peut mettre en œuvre un modèle des propriétés électromagnétiques du manteau neigeux pour corriger les variations de la phase selon la densité et le contenu en eau liquide du manteau neigeux.

Le changement d'inclinaison des supports 8 sur lesquels reposent les radio-étiquettes peut également affecter la détermination précise du déplacement de la structure 2. Ce changement d'inclinaison peut être provoqué ou favorisé par les sols mous, les glissements de terrain. On peut donc prévoir, pour corriger cet effet, un capteur d'inclinaison (inclinomètre) sur le support 8. Comme dans le cas de la compensation en température, l'inclinaison du support peut être transmise à l'antenne 4, et rendue disponible au dispositif de traitement, afin de procéder aux ajustements nécessaires des mesures. Alternativement, on peut placer au moins deux radio-étiquettes à des élévations distinctes sur un même support 8, et donc associées à un point unique de la structure 2 dont on souhaite estimer le déplacement. Les estimations de déplacements de la structure 2 établies à partir des radio-étiquettes disposées sur ce même support 8 peuvent être exploitées pour identifier et quantifier un changement d'inclinaison du support 8, et pour ajuster l'estimation du déplacement de la structure.

Bien entendu l'invention n'est pas limitée aux modes de mise en œuvre décrits et on peut y apporter des variantes de réalisation sans sortir du cadre de l'invention tel que défini par les revendications.

Ainsi, et bien que l'on ait ici présenté l'application du procédé à une structure 2 de type géologique, on pourra sans modification particulière appliquer le même procédé à une structure d'un autre type, telle qu'une structure de génie civil.

Bien qu'ici on ait indiqué que le système 1 comportait un terminal 6, principalement pour conditionner les signaux émis et reçu et pour déterminer les phases des signaux retrodiffusés, et que le système 1 comportait un dispositif de traitement 11 pour estimer le déplacement de la structure, il est envisageable que le système puisse être configuré différemment. Ainsi, ces traitements peuvent être mis en œuvre par l'un ou l'autre du terminal 6 et/ou du dispositif de traitement 11, ou réparti entre l'un et l'autre d'une manière différente de celle qui a été présentée.

De plus, les traitements et procédés présentés dans la présente demande peuvent être réalisés, au moins en partie par un programme exécuté sur un ordinateur, qui peut être constitué du dispositif de traitement 11 et/ou du terminal 6.

Enfin, le procédé et le système conforme à l'invention peuvent être utilisés en continu, c'est à dire en répétant de manière régulière au moins la deuxième étape de détermination et l'étape de traitement, pour assurer un suivi temporel précis du déplacement ou du champ de déplacement de la structure 2.

## Revendications

1. Procédé d'estimation du déplacement d'une structure géologique et/ou de génie civil (2) susceptible de se déplacer, la structure (2) étant munie d'au moins une radio-étiquette (3), et le procédé mettant en œuvre au moins une antenne (4) raccordée à un terminal d'émission réception (6) et disposée dans une zone stable indépendante de la structure (2), à portée de la radio-étiquette (3), le procédé comportant :
• une première étape de détermination, en un premier instant et au niveau du terminal (6), d'une première phase d'un premier signal rétrodiffusé par la radio-étiquette (3);
• une deuxième étape de détermination, en un deuxième instant postérieur au premier instant et au niveau du terminal (6), d'une deuxième phase d'un deuxième signal rétrodiffusé par la radio-étiquette (3);
• une étape de traitement de la première phase et la deuxième phase, comprenant une compensation des perturbations de propagation radiofréquence sur la première phase et la deuxième phase, pour estimer le déplacement de la structure (2) entre le premier instant et le deuxième instant.

2. Procédé selon la revendication 1 dans lequel la structure (2) est munie d'une pluralité de radio-étiquettes (3) disposées en des endroits distincts de la structure (2).

3. Procédé selon l'une des revendications précédentes mettant en œuvre une pluralité d'antennes (4) disposées en des endroits distincts de la zone stable.

4. Procédé selon l'une des revendications précédentes dans lequel la compensation comprend la détermination, au niveau du terminal (6), d'une phase de calibration d'un signal rétrodiffusé par une radio-étiquette de calibration (9) positionnée sur la zone stable.

5. Procédé selon l'une des revendications précédentes, la compensation comprend une calibration de la première phase et de la deuxième phase selon la température de chaque radio-étiquette (3).

6. Procédé selon l'une des revendications précédentes, la compensation comprend une calibration de la première phase et de la deuxième de phase selon une épaisseur de neige.

7. Procédé selon l'une des revendications précédentes dans lequel l'étape de traitement établit une différence entre la première phase et la deuxième phase pour estimer le déplacement de la structure selon une direction générale antenne-structure.

8. Système d'estimation du déplacement (1) d'une structure géologique et/ou de génie civil (2) susceptible de se déplacer, le système comprenant :
• au moins une radio-étiquette (3) disposée sur la structure (2);
• un terminal d'émission réception (6) configuré pour établir une phase d'un signal rétrodiffusé par la radio-étiquette (3) ;
• au moins une antenne (4) raccordée au terminal d'émission réception (6), l'antenne (4) étant disposée dans une zone stable indépendante de la structure (2), à portée de la radio-étiquette (3) ;
• un dispositif de traitement (11) relié au terminal d'émission-réception (6) et configuré pour :
i. compenser les perturbations de propagation radiofréquence d'une première phase établie en un premier instant et d'une deuxième phase établie en un deuxième instant postérieur au premier instant;
ii. estimer le déplacement de la structure (2) entre le premier instant et le deuxième instant, à partir de la première phase et de la deuxième phase.

9. Système (1) selon la revendication précédente comprenant une pluralité d'antennes (4) disposées en des endroits distincts de la zone stable.

10. Système (1) selon l'une des revendications 8 à 9 dans lequel la structure (2) est munie d'une pluralité de radio-étiquettes (3) disposées en des endroits distincts.

11. Système (1) selon l'une des revendications 8 à 10 dans lequel la structure (2) est une structure géologique et dans lequel chaque radio-étiquette (3) et/ou chaque antenne (4) est disposée sur un support non métallique (8).

12. Système (1) selon l'une des revendications 8 à 11 comprenant également une radio-étiquette de calibration (9) disposée dans la zone stable.

13. Système (1) selon l'une des revendications 8 à 12 dans lequel chaque radio-étiquette (3) comporte un capteur de température.

14. Système (1) selon l'une des revendications 8 à 13 dans lequel chaque radio-étiquette (3) et/ou chaque antenne (4) est recouverte d'un film hydrophobe.

15. Programme d'ordinateur comprenant des instructions de code programme pour l'exécution de l'étape de traitement du procédé selon l'une des revendications 1 à 7 lorsque le programme est exécuté sur un ordinateur.

## Patentansprüche

1. Verfahren zur Schätzung der Bewegung einer potenziell beweglichen geologischen und/ oder baulichen Struktur (2), wobei die Struktur (2) mit mindestens einem Funketikett (3) versehen ist, und das Verfahren mindestens eine Antenne (4) anwendet, die an ein Sender-Empfänger-Endgerät (6) angeschlossen ist, und in einer von der Struktur (2) unabhängigen stabilen Zone in Reichweite des Funketiketts (3) angeordnet ist, wobei das Verfahren Folgendes beinhaltet:
• einen ersten Bestimmungsschritt, zu einem ersten Zeitpunkt und im Bereich des Endgerätes (6), einer ersten Phase eines ersten durch das Funketikett (3) rückgestreuten Signals;
• einen zweiten Bestimmungsschritt, zu einem zweiten Zeitpunkt nach dem ersten Zeitpunkt und im Bereich des Endgerätes (6), einer zweiten Phase eines zweiten durch das Funketikett (3) rückgestreuten Signals;
• einen Bearbeitungsschritt der ersten Phase und der zweiten Phase, umfassend eine Kompensation der Funkfrequenzausbreitungsstörungen in der ersten Phase und der zweiten Phase, zum Schätzen der Bewegung der Struktur (2) zwischen dem ersten Zeitpunkt und dem zweiten Zeitpunkt.

2. Verfahren nach Anspruch 1, wobei die Struktur (2) mit einer Vielzahl von Funketiketten (3) versehen ist, die an verschiedenen Stellen der Struktur (2) angeordnet sind.

3. Verfahren nach einem der vorstehenden Ansprüche, das eine Vielzahl von Antennen (4) anwendet, die an verschiedenen Stellen der stabilen Zone angeordnet sind.

4. Verfahren nach einem der vorstehenden Ansprüche, wobei die Kompensation das Bestimmen im Bereich des Endgerätes (6) einer Kalibrierphase eines durch ein Kalibrier-Funketikett (9), das in der stabilen Zone positioniert ist, rückgestreuten Signals umfasst.

5. Verfahren nach einem der vorstehenden Ansprüche, wobei die Kompensation eine Kalibration der ersten Phase und der zweiten Phase je nach Temperatur jedes Funketiketts (3) umfasst.

6. Verfahren nach einem der vorstehenden Ansprüche, wobei die Kompensation eine Kalibration der ersten Phase und der zweiten Phase je nach einer Schneedicke umfasst.

7. Verfahren nach einem der vorstehenden Ansprüche, wobei der Bearbeitungsschritt eine Differenz zwischen der ersten Phase und der zweiten Phase zum Schätzen der Bewegung der Struktur in einer allgemeinen Richtung Antenne-Struktur erstellt.

8. System zur Schätzung der Bewegung (1) einer potenziell beweglichen geologischen und/ oder baulichen Struktur (2), wobei das System umfasst:
• mindestens ein Funketikett (3), das auf der Struktur (2) angeordnet ist;
• ein Sender-Empfänger-Endgerät (6), das konfiguriert ist, um eine Phase eines durch das Funketikett (3) rückgestreuten Signals zu erstellen;
• mindestens eine Antenne (4), die an das Sender-Empfänger-Endgerät (6) angeschlossen ist, wobei die Antenne (4) in einer von der Struktur (2) unabhängigen stabilen Zone in Reichweite des Funketiketts (3) angeordnet ist;
• eine Bearbeitungsvorrichtung (11), die an das Sender-Empfänger-Endgerät (6) angeschlossen ist, und konfiguriert ist zum:
i. Kompensieren der Funkfrequenzausbreitungsstörungen einer zu einem ersten Zeitpunkt erstellten ersten Phase und einer zu einem zweiten Zeitpunkt, nach dem ersten Zeitpunkt, erstellten zweiten Phase;
ii. Schätzen der Bewegung der Struktur (2) zwischen dem ersten Zeitpunkt und dem zweiten Zeitpunkt ab der ersten Phase und der zweiten Phase.

9. System (1) nach dem vorstehenden Anspruch, umfassend eine Vielzahl von Antennen (4), die an verschiedenen Stellen der stabilen Zone angeordnet sind.

10. System (1) nach einem der Ansprüche 8 bis 9, wobei die Struktur (2) mit einer Vielzahl von Funketiketten (3) versehen ist, die an verschiedenen Stellen angeordnet sind.

11. System (1) nach einem der Ansprüche 8 bis 10, wobei die Struktur (2) eine geologische Struktur ist, und wobei jedes Funketikett (3) und/ oder jede Antenne (4) auf einer nicht metallischen Halterung (8) angeordnet ist.

12. System (1) nach einem der Ansprüche 8 bis 11, auch ein Kalibrier-Funketikett (9) umfassend, das in der stabilen Zone angeordnet ist.

13. System (1) nach einem der Ansprüche 8 bis 12, wobei jedes Funketikett (3) einen Temperatursensor beinhaltet.

14. System (1) nach einem der Ansprüche 8 bis 13, wobei jedes Funketikett (3) und/ oder jede Antenne (4) mit einem wasserabweisenden Film überdeckt ist.

15. Computerprogramm, Programmcodeanweisungen zum Ausführen des Bearbeitungsschrittes des Verfahrens nach einem der Ansprüche 1 bis 7 umfassend, wenn das Programm in einem Computer ausgeführt wird.

## Claims

1. A method for estimating the movement of a potentially movable geological and/or civil engineering structure (2), the structure (2) being provided with at least one RFID tag (3), and the method implementing at least one antenna (4) connected to a transceiver terminal (6) and disposed in an independent stable area of the structure (2), close to the RFID tag (3), the method including:
• a first step of determining, in a first instant and at the terminal (6), a first phase of a first signal back-scattered by the RFID tag (3);
• a second step of determining, in a second instant after the first instant and at the terminal (6), a second phase of a second signal back-scattered by the RFID tag (3);
• a step of processing the first phase and the second phase, comprising a compensation for the radiofrequency propagation disturbances on the first phase and the second phase, to estimate the movement of the structure (2) between the first instant and the second instant.

2. The method according to claim 1 wherein the structure (2) is provided with a plurality of RFID tags (3) disposed at separate locations of the structure (2).

3. The method according to one of the preceding claims implementing a plurality of antennas (4) disposed at distinct locations in the stable area.

4. The method according to one of the preceding claims wherein the compensation comprises determining, at the terminal (6), a phase of calibrating a signal back-scattered by a calibration RFID tag (9) positioned on the stable area.

5. The method according to one of the preceding claims, the compensation comprises a calibration of the first phase and of the second phase according to the temperature of each RFID tag (3).

6. The method according to one of the preceding claims, the compensation comprises a calibration of the first phase and of the second phase according to a snow thickness.

7. The method according to one of the preceding claims wherein the processing step establishes a difference between the first phase and the second phase to estimate the movement of the structure in a general antenna-structure direction.

8. A system for estimating the movement (1) of a potentially movable geological and/or civil engineering structure (2), the system comprising:
• at least one RFID tag (3) disposed on the structure (2);
• a transceiver terminal (6) configured to establish a phase of a signal back-scattered by the RFID tag (3);
• at least one antenna (4) connected to the transceiver terminal (6), the antenna (4) being disposed in an independent stable area of the structure (2), close to the RFID tag (3);
• a processing device (11) connected to the transceiver terminal (6) and configured for:
i. compensating for the radiofrequency propagation disturbances of a first phase established in a first instant and of a second phase established in a second instant after the first instant;
ii. estimating the movement of the structure (2) between the first instant and the second instant, from the first phase and from the second phase.

9. The system (1) according to the preceding claim comprising a plurality of antennas (4) disposed at distinct locations in the stable area.

10. The system (1) according to one of claims 8 to 9 wherein the structure (2) is provided with a plurality of RFID tags (3) disposed at separate locations.

11. The system (1) according to one of claims 8 to 10 wherein the structure (2) is a geological structure and wherein each RFID tag (3) and/or each antenna (4) is disposed on a non-metallic support (8).

12. The system (1) according to one of claims 8 to 11 also comprising a calibration RFID tag (9) disposed in the stable area.

13. The system (1) according to one of claims 8 to 12 wherein each RFID tag (3) includes a temperature sensor.

14. The system (1) according to one of claims 8 to 13 wherein each RFID tag (3) and/or each antenna (4) is covered with a hydrophobic film.

15. A computer program comprising program code instructions for executing the processing step of the method according to one of claims 1 to 7 when the program is executed on a computer.
